# EUROPEAN PATENT APPLICATION

(11) **EP 2 597 565 A1**
(43) Date of publication of application: **29.05.2013**
(21) Application number: 12193386.5
(22) Date of filing: 20.11.2012
(51) Int. Cl.: G06F 3/14, G09G 5/14, G06F 3/048, H04N 7/15

(54) **Image processing apparatus, image processing system, method, computer program, and computer-readable carrier medium**

(30) Priority: 25.11.2011 JP 2011257109; 12.06.2012 JP 2012132706
(71) Applicant: Ricoh Company, Ltd., Tokyo 143-8555 (JP)
(72) Inventor: Sakuramata, Yoshifumi, Tokyo, 143-8555 (JP); Yachida, Masuyoshi, Tokyo, 143-8555 (JP)
(74) Representative: Schwabe - Sandmair - Marx

(57) **Abstract**

An image processing apparatus (110; 1010a, 1010b, 1010c; 2210) includes: an acquisition unit (206) that acquires a display image from an information processing apparatus (130a, 130b, 130c); a position information acquisition unit (224) that acquires position regarding a position of a substance (240) relative to a display unit (112, 226); a drawn image generating unit (216) that produces a drawn image based on the position information; an image generating unit (212) that produces a display window to cause the display image to be displayed on the display window; a combining unit (218) that combines the display image, the display window, and the drawn image; and a display controlling unit (220) that causes the display unit (112, 226) to display an image combined by the combining unit (218).

## Description

### CROSS-REFERENCE TO RELATED APPLICATIONS

The present application claims priority to and incorporates by reference the entire contents of Japanese Patent Application No. 2011-257109 filed in Japan on November 25, 2011 and Japanese Patent Application No. 2012-132706 filed in Japan on June 12, 2012.

### BACKGROUND OF THE INVENTION

### 1. Field of the Invention

The present invention relates to an image processing apparatus capable of displaying any image, and more specifically relates to an image processing apparatus that displays a display screen of a separate information processing apparatus and a drawn image made by a user, an image processing system including the image processing apparatus, a method and a computer program executed by the image processing apparatus, and a computer-readable carrier medium.

### 2. Description of the Related Art

An electronic blackboard that has a large display and displays on the large display a background image on which a user can write an image such as a character, a numeral and a figure has been used in a meeting held in a company, an educational institution, an administrative organ, or the like.

As an example of such an electronic blackboard, Japanese Patent Application Laid-open No. 2008-097371 discloses an electronic information board system in which a computer controlling a display device displays an insert image on the display device so as to be superimposed on a background image. In the electronic information board system, the computer includes a driver controlling the display device, and a drawn image made by a user using a touch panel provided on the display device is displayed on the display device so as to be superimposed on a background image.

When the electronic information board system described in Japanese Patent Application Laid-open No. 2008-097371 is used with an information processing apparatus such as a notebook PC which is brought by a user and connected to the electronic information board system, the information processing apparatus is connected to the display device of the electronic information board system and a screen of the information processing apparatus is displayed on the display device. In such a case, dedicated software (e.g., driver software) needs to be installed on the information processing apparatus in order to superimpose a drawn image made using the touch panel, forcing a user to perform troublesome advance preparation such as installation or setting. In addition, running such software on the information processing apparatus applies a load to the information processing apparatus.

The electronic information board system described in Japanese Patent Application Laid-open No. 2008-097371 has a problem in that it can display a screen of only a single information processing apparatus but cannot display screens of a plurality of information processing apparatuses simultaneously. The electronic information board system also has a problem in that a screen of an information processing apparatus cannot be displayed in real time. Furthermore, the electronic information board system has a problem in that an information processing apparatus cannot be operated from the electronic information board system.

There is a need to provide an image processing apparatus that can display display images of a plurality of information processing apparatuses in real time and makes it possible to operate the information processing apparatuses from the image processing apparatus, without installing dedicated software on the information processing apparatuses, when the image processing apparatus is used with the information processing apparatuses connected to the image processing apparatus, an image processing system including the image processing apparatus, and a method and a computer program executed by the image processing apparatus.

### SUMMARY OF THE INVENTION

It is an object of the present invention to at least partially solve the problems in the conventional technology.

An image processing apparatus includes: an acquisition unit that acquires a display image from an information processing apparatus; a position information acquisition unit that acquires position information regarding a position of a substance relative to the display unit; a drawn image generating unit that produces a drawn image based on the position information; an image generating unit that produces a display window to cause the display image to be displayed on the display window; a combining unit that combines the display image, the display window, and the drawn image; and a display controlling unit that causes the display unit to display an image combined by the combining unit.

A method is executed by an image processing apparatus displaying an image on a display unit. The method includes: acquiring a display image from an information processing apparatus; acquiring position information regarding a position of a substance relative to the display unit; producing a drawn image based on the position information; producing a display window on which the display image is to be displayed; combining the display image, the display window, and the drawn image; and causing the display unit to display an image combined at the combining.

An image processing system includes: an acquisition unit that acquires a display image from an information processing apparatus; a display unit that displays an image; a position information detector that detects a position of a substance relative to the display unit and produces position information; an drawn image generating unit that produces a drawn image using the position information; an image generating unit that produces a display window to cause the display image to be displayed on the display window; a combining unit that combines the display image, the display window, and the drawn image; and a display controlling unit that causes the display unit to display an image combined by the combining unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram illustrating an embodiment of an image processing system of the present invention;
Fig. 2 is a schematic diagram illustrating a hardware configuration and a functional configuration of an image processing apparatus in the embodiment illustrated in Fig. 1;
Fig. 3 is a flowchart illustrating processing executed by the image processing apparatus in the embodiment illustrated in Fig. 1;
Fig. 4 is a flowchart illustrating processing executed by an image acquisition unit of the image processing apparatus in the embodiment of the present invention;
Fig. 5 is a flowchart illustrating processing executed by an application image generating unit of the image processing apparatus of the present invention;
Fig. 6 is a flowchart illustrating processing executed by a layout management unit of the image processing apparatus in the embodiment illustrated in Fig. 1;
Fig. 7 is a flowchart illustrating processing executed by a combining unit and a display controlling unit of the image processing apparatus of the present invention;
Fig. 8 is a conceptual view of combining processing of an application image layer, an image capture layer, and a handwriting layer executed by the image processing apparatus of the present invention;
Fig. 9 is a schematic diagram illustrating an embodiment of an initial menu screen, a display selection menu screen, and a layout selection menu screen that are displayed on a display unit by the image processing apparatus of the present invention;
Fig. 10 is a schematic diagram illustrating another embodiment of the image processing system of the present invention;
Fig. 11 is a schematic diagram illustrating a hardware configuration and a functional configuration of an image processing apparatus in the embodiment illustrated in Fig. 10;
Fig. 12 is a sequence diagram illustrating processing executed by image processing apparatuses 1010a, 1010b, and 1010c of an image processing system 1000;
Figs. 13A and 13B are flowcharts illustrating processing executed by the image processing apparatus providing an image frame in the embodiment illustrated in Fig. 10;
Fig. 14 is a flowchart illustrating processing executed by an image processing apparatus serving as a server machine in the embodiment illustrated in Fig. 10;
Fig. 15 is a flowchart illustrating processing executed by the image processing apparatus serving as the server machine in the embodiment illustrated in Fig. 10;
Fig. 16 is a flowchart illustrating processing executed by an image processing apparatus serving as a client machine in the embodiment illustrated in Fig. 10;
Fig. 17 is a flowchart illustrating processing executed by the image processing apparatus serving as the server machine in the embodiment illustrated in Fig. 10;
Fig. 18 is a flowchart illustrating processing executed by an image processing apparatus serving as a client machine in the embodiment illustrated in Fig. 10;
Fig. 19 is a flowchart illustrating processing executed by the image processing apparatus serving as the server machine in the embodiment illustrated in Fig. 10;
Fig. 20 is a flowchart illustrating processing executed by the image processing apparatus serving as the server machine in the embodiment illustrated in Fig. 10;
Fig. 21 is a flowchart illustrating processing executed by an image processing apparatus serving as a client machine in the embodiment illustrated in Fig. 10; and
Fig. 22 is a schematic diagram illustrating still another embodiment of an image processing system of the present invention.

### DETAILED DESCRIPTION OF THE PREFERRED EMBODIMENTS

Embodiments of the present invention are described below. The present invention, however, is not limited to the following embodiments.

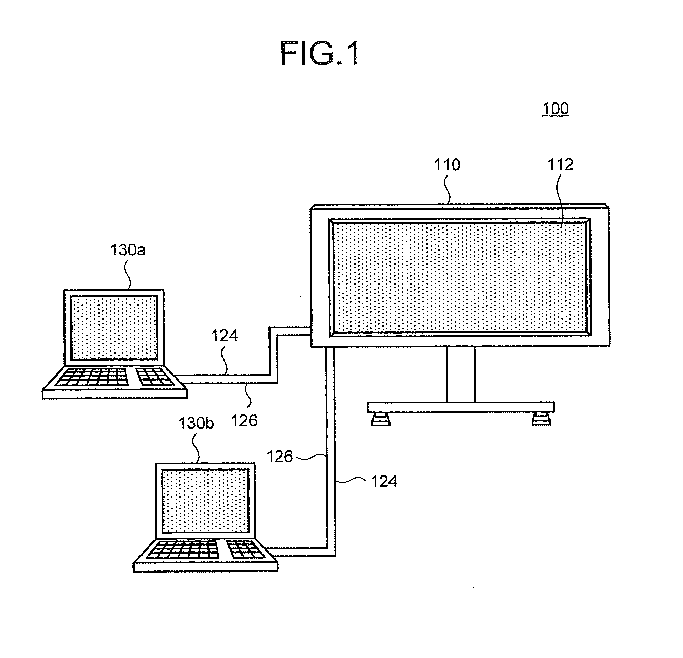

Fig. 1 is a schematic diagram illustrating an embodiment of an image processing system of the present invention. An image processing system 100 includes an image processing apparatus 110 and user's PCs 130a and 130b. The image processing apparatus 110 and the user's PCs 130a and 130b are connected with cables 124 and 126, respectively.

The image processing apparatus 110 can display display images of the user's PCs 130a and 130b and a drawn image made by a user. The image processing apparatus 110 generates an event when contact with a display unit 112 is made, and transmits the event to the user's PCs 130a and 130b as an event of an input device such as a mouse and a keyboard.

The user's PCs 130a and 130b each are an information processing apparatus that provides an image to be displayed on the image processing apparatus 110. The user's PCs 130a and 130b each include an interface that outputs an image signal and supplies the image signal to form a display image of the user's PCs 130a and 130b to the image processing apparatus 110 at a certain rate (e.g., 30 frames per second).

In the present embodiment, the user's PCs 130a and 130b each include a video graphics array (VGA) output terminal (not illustrated) as an interface and can transmit a VGA signal to the image processing apparatus 110 through the cable 124 such as a VGA cable. In another embodiment, the user's PCs 130a and 130b each may transmit a display image by wireless communications compliant with various wireless communications protocols.

The user's PCs 130a and 130b each can also acquire an image displayed by the image processing apparatus 110 on the display unit 112. The user's PCs 130a and 130b each include a universal serial bus (USB) port (not illustrated) and can acquire a display image stored in the image processing apparatus 110 connected to the user's PCs 130a and 130b with a USB cable 126 using a general-purpose driver such as USB mass storage class.

In the embodiment illustrated in Fig. 1, a notebook PC is adopted as the user's PCs 130a and 130b. In another embodiment, an image processing apparatus capable of supplying an image frame such as a desktop PC, a tablet PC, a personal digital assistant (PDA), a digital video camera, and a digital camera, can be adopted. The image processing system 100 illustrated in Fig. 1 adopts the two user's PCs 130a and 130b. In another embodiment, a single user's PC or three or more user's PCs can be adopted.

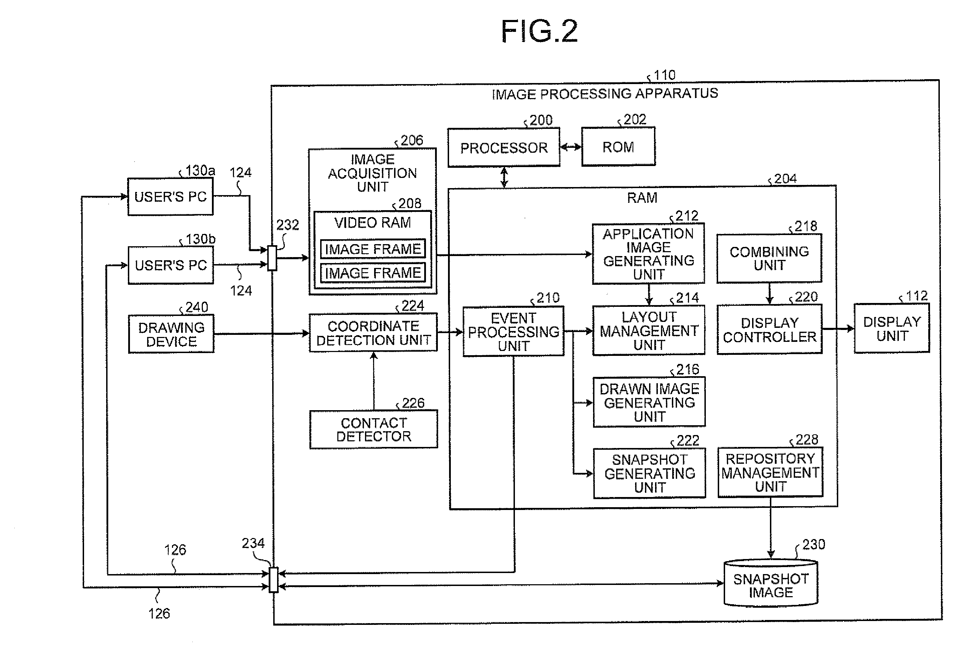

Fig. 2 is a schematic diagram illustrating a hardware configuration and a functional configuration of the image processing apparatus 110 in the embodiment illustrated in Fig. 1. The hardware configuration and the functional configuration of the image processing apparatus 110 are described below with reference to Fig. 2.

The image processing apparatus 110 includes an image input interface 232 and an image output interface 234, and is connected to the user's PCs 130a and 130b through these interfaces.

The image input interface 232 receives an image signal to form a display image of the user's PCs 130a and 130b. In the embodiment, a digital visual interface (DVI) connector having a DVI terminal can be adopted as the image input interface 232. The image input interface 232 receives a VGA signal from the user's PCs 130a and 130b through the cable 124 such as a VGA cable and supplies the VGA signal to an image acquisition unit 206 included in the image processing apparatus 110.

In another embodiment, a VGA connector, a high-definition multimedia interface (HDMI) connector, a Displayport connector or the like can be adopted. In still another embodiment, the image input interface 232 may receive an image signal from the user's PCs 130a and 130b by wireless communications compliant with a wireless communications protocol such as Bluetooth (registered trademark) or WiFi (Wireless Fidelity).

The image output interface 234 is a physical interface that outputs a display image of the image processing apparatus 110 to external apparatuses such as the user's PCs 130a and 130b. In the present embodiment, a USB socket can be adopted as the image output interface 234.

The image processing apparatus 110 includes a processor 200, a read only memory (ROM) 202, a random access memory (RAM) 204, the image acquisition unit 206, a coordinate detection unit 224, a contact detector 226, and the display unit 112.

The processor 200, which is a processing unit such as a central processing unit (CPU) or a micro processing unit (MPU), runs an operating system (OS) such as WINDOWS (registered trademark), UNIX (registered trademark), LINUX (registered trademark), real-time operating system nucleus (TRON), industrial TRON (ITRON), or µITRON, and executes a computer program according to the invention described by a programming language such as assembly language, C, C++, Java (registered trademark), JavaScript (registered trademark), practical extraction and report language (PERL), RUBY, or PYTHON under control of the OS. The ROM 202 is a non-volatile memory in which a boot program, such as a basic input output system (BIOS) and an extensible firmware interface (EFI), or the like is stored.

The RAM 204 is a main storage such as a dynamic RAM (DRAM) and a static RAM (SRAM), and provides an execution space to execute the program of the present invention. The processor 200 reads the program of the invention from a hard disk device (not illustrated) that stores therein software programs and various types of data, deploys the program into the RAM 204, and executes it. The program of the present invention includes an event processing unit 210, an application image generating unit 212, a layout management unit 214, a drawn image generating unit 216, a combining unit 218, a display controlling unit 220, a snapshot generating unit 222, and a repository management unit 228 as program modules.

The image acquisition unit 206 is a functional unit that acquires an image signal from the user's PCs 130a and 130b. Upon receiving image signals from the user's PCs 130a and 130b through the image input interface 232, the image acquisition unit 206 analyzes the image signals, derives image information such as resolutions of image frames that are the display images of the user's PCs 130a and 130b formed according to the image signals and frequencies of update of the image frames from the image signals, and transmits the image information to the application image generating unit 212.

The image acquisition unit 206 forms respective image frames that are display images of the user's PCs 130a and 130b using the respective image signals, and performs overwrite save of the image frames in a video RAM 208 serving as a storage unit that can temporarily store image data.

The application image generating unit 212 is a functional unit that produces various display windows to be displayed on the display unit 112. These display windows include a display window displaying an image frame corresponding to a display image of one of the user's PCs 130a and 130b, a display window displaying a drawn image made by a user, a display window displaying a button, menu or the like to perform various types of settings of the image processing apparatus 110, and a display window of a file viewer, web browser, or the like. The application image generating unit 212 draws these display windows on an image layer on which the display windows are to be drawn.

The layout management unit 214 is a functional unit that draws display images of the user's PCs 130a and 130b on respective display windows produced by the application image generating unit 212. Upon receiving image information from the image acquisition unit 206, the layout management unit 214 acquires an image frame stored in the video RAM 208, changes size of the image frame so as to fit size of a display window produced by the application image generating unit 212, and draws the image frame on an image layer on which the image frame is to be drawn.

The contact detector 226 is a functional unit that detects contact with a substance such as a drawing device 240. In the present embodiment, a coordinate input/detection device using infrared ray interruption such as described in Japanese Patent No. 4627781 is used as the contact detector 226. In the coordinate input/detection device, two light emitting-receiving devices disposed at both ends on the lower side of the display unit 112 emit a plurality of infrared rays in parallel with the display unit 112 and receive light reflected on the same optical path by a reflection member disposed around the display unit 112. The contact detector 226 notifies the coordinate detection unit 224 of identification information of infrared rays emitted by the two light emitting-receiving devices and interrupted by a substance, and the coordinate detection unit 224 identifies coordinates indicating a coordinate position corresponding to a position at which the substance makes contact with the display unit 112.

In another embodiment, various detection units such as a capacitance touch panel identifying a contact position by detecting change in electrostatic capacitance, a resistive touch panel identifying a contact position by detecting change in voltage in two opposing resistance films, and an electromagnetic touch panel identifying a contact position by detecting electromagnetic induction generated when a substance makes contact with a display unit.

The coordinate detection unit 224 is a functional unit that calculates a coordinate position corresponding to a position at which a substance makes contact with the display unit 112, and issues various events. In the present embodiment, the coordinate detection unit 224 calculates a coordinate position of a contact position of a substance utilizing identification information of interrupted infrared rays notified by the contact detector 226. The coordinate detection unit 224 issues various events to the event processing unit 210 together with a coordinate position of a contact position.

Events issued by the coordinate detection unit 224 includes an event notifying that a substance makes contact with or approaches the display unit 112 (TOUCH), an event notifying that a contact point or an approaching point moves while a substance keeps contact with or approach to the display unit 112 (MOVE), and an event notifying that a substance is released from the display unit 112 (RELEASE). These events each include coordinate position information, namely, contact position coordinates or approaching position coordinates.

The drawing device 240 is used to perform drawing by bringing the drawing device 240 into contact with the contact detector 226 of the image processing apparatus 110. The drawing device 240 has a pen shape and includes at a tip thereof a contact detection device that detects contact with a substance. When the contact detection device is brought into contact with a substance, the drawing device 240 transmits a contact signal indicating contact to the coordinate detection unit 224 together with identification information of the drawing device 240.

The drawing device 240 includes a mode switching switch to switch between an image processing apparatus operation mode and a user's PC operation mode, at a side surface, a rear end or the like. The image processing apparatus operation mode means a mode in which a user can draw any figure, character or the like on the display unit 112 of the image processing apparatus 110 and also can select an on-screen object such as a menu and a button displayed on the display unit 112. The user's PC operation mode means a mode in which a user can select an on-screen object such as a menu and a button displayed on the display unit 112.

For example, when a user causes the drawing device 240 to make contact with the image processing apparatus 110 while keeping the mode switching switch pressed down, the drawing device 240 transmits a mode type signal indicating the user's PC operation mode together with the contact signal and the identification information of the drawing device 240. When a user causes the drawing device 240 to make contact with the image processing apparatus 110 without keeping the mode switching switch pressed down, the drawing device 240 transmits a mode type signal indicating the image processing apparatus operation mode together with the contact signal and the identification information of the drawing device 240.

In the present embodiment, the coordinate detection unit 224 calculates a coordinate position corresponding to a contact position of a substance when receiving identification information of infrared rays from the contact detector 226, and then issues various events when receiving the contact signal from the drawing device 240. At that time, the coordinate detection unit 224 notifies the event processing unit 210 of information indicating a mode type (hereinafter referred to as "mode type information") together with a corresponding event.

In the present embodiment, various signals are transmitted by short-distance wireless communications such as Bluetooth (registered trademark). In other embodiments, various signals can be transmitted by wireless communications using ultrasonic waves or infrared rays.

The event processing unit 210 is a functional unit that processes an event issued by the coordinate detection unit 224. When the user's PC operation mode is designated, the event processing unit 210 transmits a position indicating event to the user's PC 130a or the user's PC 130b upon receiving an event from the coordinate detection unit 224. When the image processing apparatus operation mode is designated, the event processing unit 210 transmits a drawing instruction event or a selection notification event to another functional unit in the image processing apparatus 110 upon receiving an event from the coordinate detection unit 224.

The position indicating event means an event issued by an input device such as a mouse of the user's PC 130a or 130b and indicating a position of a pointer. When the user's PC operation mode is designated, the position indicating event is issued to the user's PCs 130a and 130b by being caused by contact of the drawing device 240. The event processing unit 210 converts the coordinate position information included in the event issued by the coordinate detection unit 224 into coordinate position information adapted to the screen sizes of the user's PCs 130a and 130b, and transmits the converted coordinate position information to the user's PCs 130a and 130b together with the position indicating event. The user's PCs 130a and 130b process the position indicating event in a similar manner as in an event issued by the input device such as the mouse.

The drawing instruction event means an event to perform drawing on the image processing apparatus 110. When the image processing apparatus operation mode is designated, the drawing instruction event is issued by being caused by contact of the drawing device 240 with the display unit 112.

The selection notification event means a event to notifying that one of various on-screen objects such as a button and a menu included in a screen displayed on the display unit 112 is selected. When the image processing apparatus operation mode is designated, the selection notification event is issued by being caused by contact of the drawing device 240 with the display unit 112. The event processing unit 210 issues the selection notification event when coordinate position information included in an event issued by the coordinate detection unit 224 is within a coordinate region of a corresponding on-screen object.

In the present embodiment, respective pieces of identification information are allocated to a drawing instruction event and a selection notification event. The functional units included in the image processing apparatus 110, which operate triggered by the events, execute various types of processing with reference to a corresponding piece of identification information. A selection notification event is provided with identification information of a selected on-screen object. The functional units included in the image processing apparatus 110, which operate triggered by the events, execute various types of processing with reference to identification information of a corresponding on-screen object.

The drawn image generating unit 216 is a functional unit that produces a drawn image drawn by a user using the drawing device 240. The drawn image generating unit 216 produces an image layer in which color at a coordinate position indicated by the coordinate position information is changed to a specific color. The drawn image generating unit 216 stores the coordinate position in a store region for drawing information in the RAM 204 as the drawing information.

The combining unit 218 is a functional unit that combines various images. The combining unit 218 combines an image layer on which the application image generating unit 212 produces an image (hereinafter referred to as an "application image layer"), an image layer on which the layout management unit 214 produces a display image of the user's PCs 130a and 130b (hereinafter referred to as an "image capture layer"), and an image layer on which the drawn image generating unit 216 produces an image (hereinafter referred to as a "handwriting layer").

The display controlling unit 220 is a functional unit that controls the display unit 112. The display controlling unit 220 causes the display unit 112 to display a combined image produced by the combining unit 218. In the present embodiment, the combining unit 218 calls the display controlling unit 220 and displays a combined image on the display unit 112. In another embodiment, the combining unit 218 and the display controlling unit 220 may combine image layers and cause the display unit 112 to display a combined image at the same frequency as the frequency of update of an image frame included in the image information.

The snapshot generating unit 222 is a functional unit producing a snapshot image that is a combined image of a display image of the user's PCs 130a and 130b and a drawn image produced by the drawn image generating unit 216. Upon receiving a selection notification event notifying that a snapshot button is selected that is displayed on the display unit 112 to instruct acquisition of a snapshot, the snapshot generating unit 222 combines the image capture layer and the handwriting layer to produce a snapshot image. After producing the snapshot image, the snapshot generating unit 222 causes the repository management unit 228 to store the snapshot image in a storage 230.

The repository management unit 228 is a functional unit that controls the storage 230 in which a snapshot image is stored. The repository management unit 228 stores a snapshot image in the storage 230 on the basis of instruction of the snapshot generating unit 222 as described above. The repository management unit 228 acquires a snapshot image from the storage 230 and transmits the acquired snapshot image to the user's PCs 130a and 130b on the basis of instruction of the user's PCs 130a and 130b.

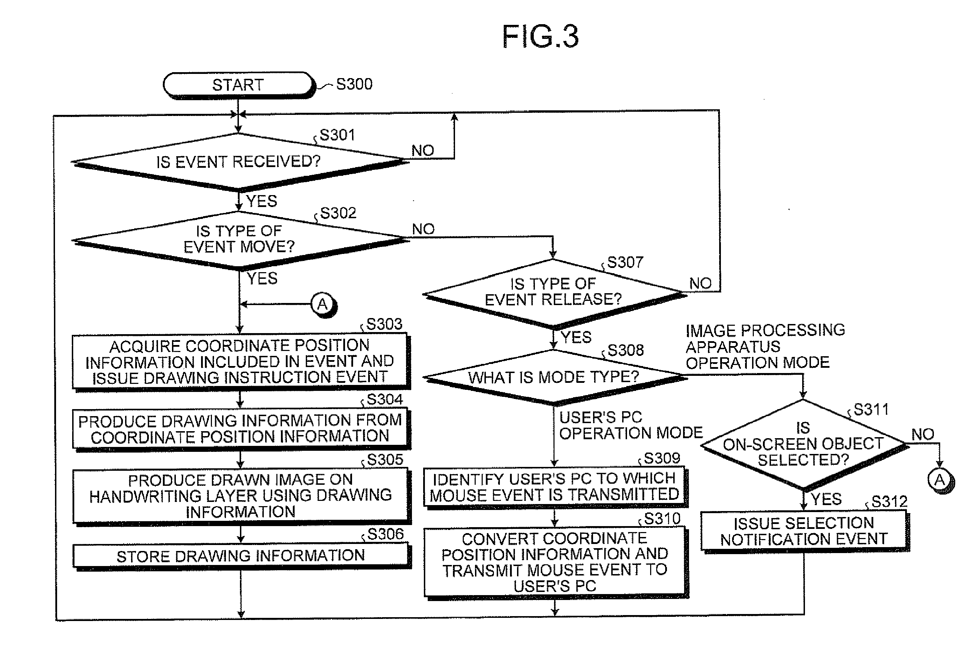

Fig. 3 is a flowchart illustrating processing executed by the image processing apparatus in the embodiment illustrated in Fig. 1. Processing executed by the image processing apparatus 110 when a user gives various instructions using the drawing device 240 is described below with reference to Fig. 3.

The processing illustrated in Fig. 3 starts at step S300. At step S301, the event processing unit 210 determines whether an event is received from the coordinate detection unit 224. If no event is received (No), the processing at step S301 is repeated. On the other hand, if an event is received (Yes), the processing branches to step S302. At step S302, the event processing unit 210 determines whether a type of the event is "MOVE". If the type of the event is "MOVE" (Yes), the processing branches to step S303.

At step S303, the event processing unit 210 acquires coordinate position information included in the event received from the coordinate detection unit 224 and issues a drawing instruction event to the drawn image generating unit 216. At step S304, the drawn image generating unit 216 produces drawing information from the coordinate position information. At step S305, the drawn image generating unit 216 produces a drawn image on the handwriting layer using the drawing information. At step S306, the drawn image generating unit 216 stores the drawing information in a store region for drawing information in the RAM 204, and thereafter the processing returns to step S301.

On the other hand, if it is determined that the type of the event is not "MOVE", i.e., the type of the event is "TOUCH" or "RELEASE" at step S302 (No), the processing branches to step S307.

At step S307, the event processing unit 210 determines whether the type of the event is "RELEASE". If the type of event is not "RELEASE", i.e., the type of event is "TOUCH" (No), the processing branches to step S301. On the other hand, if the type of the event is "RELEASE" (Yes), the processing branches to step S308.

At step S308, the event processing unit 210 determines a type of mode using mode type information attached to the event. If the type of the mode is the user's PC operation mode, the processing branches to step S309. At step S309, the event processing unit 210 identifies a user's PC to which the event processing unit 210 transmits a position indicating event.

In the present embodiment, when the layout management unit 214 displays a display image of a single user's PC on the display unit 112, screen information identifying the display image of the user's PC is stored in the RAM 204. The event processing unit 210 identifies a user's PC to which the event processing unit 210 transmits a position indicating event using the screen information.

At step S310, the event processing unit 210 converts coordinate position information attached to the event and transmits the converted coordinate position information and a position indicating event to the user's PC identified at step S309, and thereafter the processing returns to step S301.

On the other hand, if it is determined that the type of the mode is the image processing apparatus operation mode at step S308, the processing branches to step S311. At step S311, the event processing unit 210 determines whether an on-screen object displayed on the display unit 112 is selected. If an on-screen object is selected (Yes), the processing branches to step S312. On the other hand, if no on-screen object is selected (No), the processing returns to step S303.

In the present embodiment, when the application image generating unit 212 draws an on-screen object, identification information of the on-screen object and coordinate position information indicating a region of the on-screen object are stored in the RAM 204. The event processing unit 210 determines whether the on-screen object is selected by determining whether coordinate position information attached to an event is in the region of the on-screen object using the coordinate position information of the on-screen object.

At step S312, the event processing unit 210 performs notification of a selection notification event together with the identification information of the on-screen object, and thereafter the processing returns to step S301.

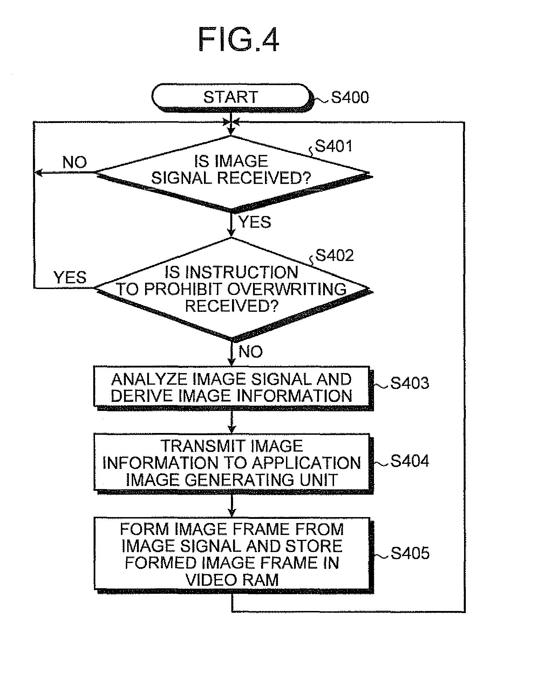

Fig. 4 is a flowchart illustrating processing executed by the image acquisition unit 206 of the image processing apparatus of the present invention. The processing executed by the image acquisition unit 206 is described below with reference to Fig. 4.

The processing illustrated in Fig. 4 starts at step S400. At step S401, the image acquisition unit 206 determines whether an image signal is received from the user's PCs 130a and 130b. If no image signal is received (No), the processing at step S401 is repeated. On the other hand, if an image signal is received (Yes), the processing branches to step S402.

At step S402, the image acquisition unit 206 determines whether an instruction to prohibit overwrite save of an image frame in the video RAM 208 is received. If the instruction to prohibit overwrite save of an image frame is received (Yes), the processing returns to step S401. On the other hand, if the instruction to prohibit overwrite save of an image frame is not received (No), the processing branches to step S403.

The image processing apparatus 110 in the present embodiment includes a button to prohibit overwrite save of an image frame, for example. When the button is pressed, the instruction to prohibit overwrite save of an image frame is transmitted to the image acquisition unit 206. The button enables a user to prohibit overwrite save of an image frame at any time. For example, prohibiting overwrite save of an image frame allows an image frame having been stored in the video RAM 208 to be continuously displayed on the display unit 112 when disorder of an image frame may occur due to replacement of a user's PC, for example.

At step S403, the image acquisition unit 206 analyzes the image signal and derives image information. At step S404, the image acquisition unit 206 transmits the image information to the application image generating unit 212. At step S405, the image acquisition unit 206 forms an image frame from the image signal and stores the formed image frame in the video RAM 208, and thereafter the processing returns to step S401.

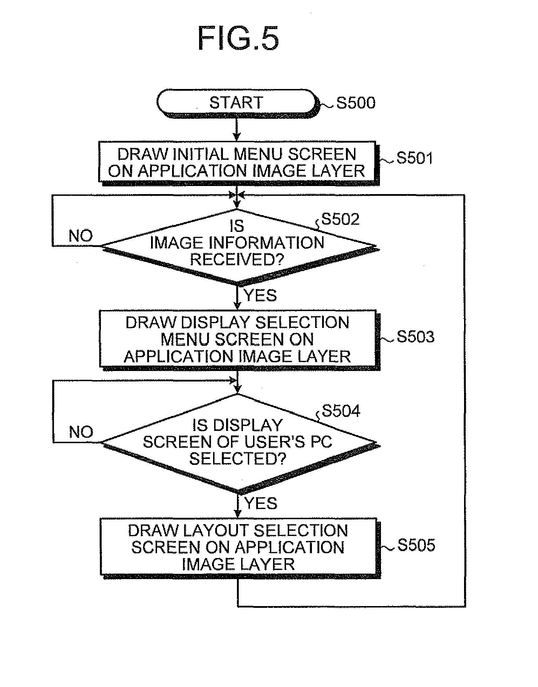

Fig. 5 is a flowchart illustrating processing executed by the application image generating unit of the image processing apparatus of the present invention. The processing executed by the application image generating unit 212 is described below with reference to Fig. 5.

The processing illustrated in Fig. 5 starts at step S500.

At step S501, the application image generating unit 212 draws an initial menu screen on the application image layer. At step S502, the application image generating unit 212 determines whether image information is received from the image acquisition unit 206. If no image information is received (No), the processing at step S502 is repeated. On the other hand, if image information is received (Yes), the processing branches to step S503. At step S503, the application image generating unit 212 acquires an image frame from the video RAM 208 and draws a display selection menu screen including the acquired image frame, on the application image layer.

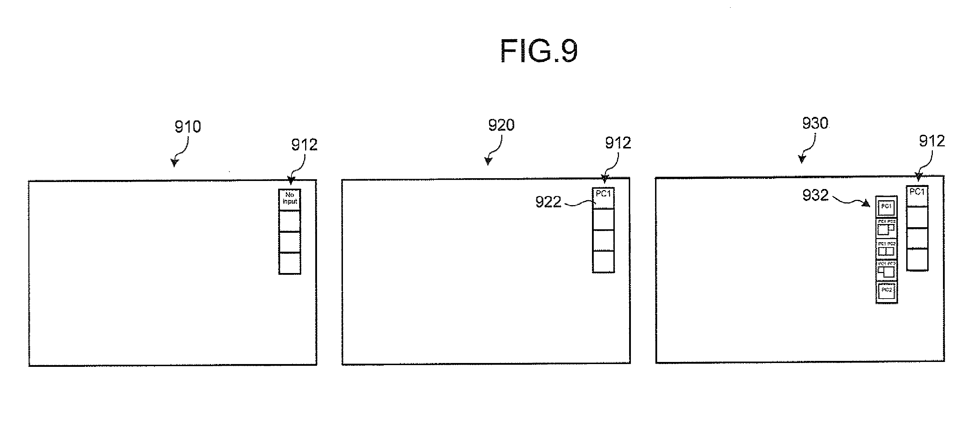

At step S504, the application image generating unit 212 determines whether a display image of a user's PC displayed on the display selection menu screen, which is described later with reference to Fig. 9, is selected. The application image generating unit 212 can determine whether a display image of a user's PC is selected by determining whether a selection notification event notifying that the display image of the user's PC is selected is received. If no display image of a user's PC is selected (No), the processing at step S504 is repeated. On the other hand, if a display image of a user's PC is selected (Yes), the processing branches to step S505. At step S505, the application image generating unit 212 draws a layout selection menu screen, from which layout of a display image of a user's PC can be selected and which is described later with reference to Fig. 9, on the application image layer, and thereafter the processing returns to step S502.

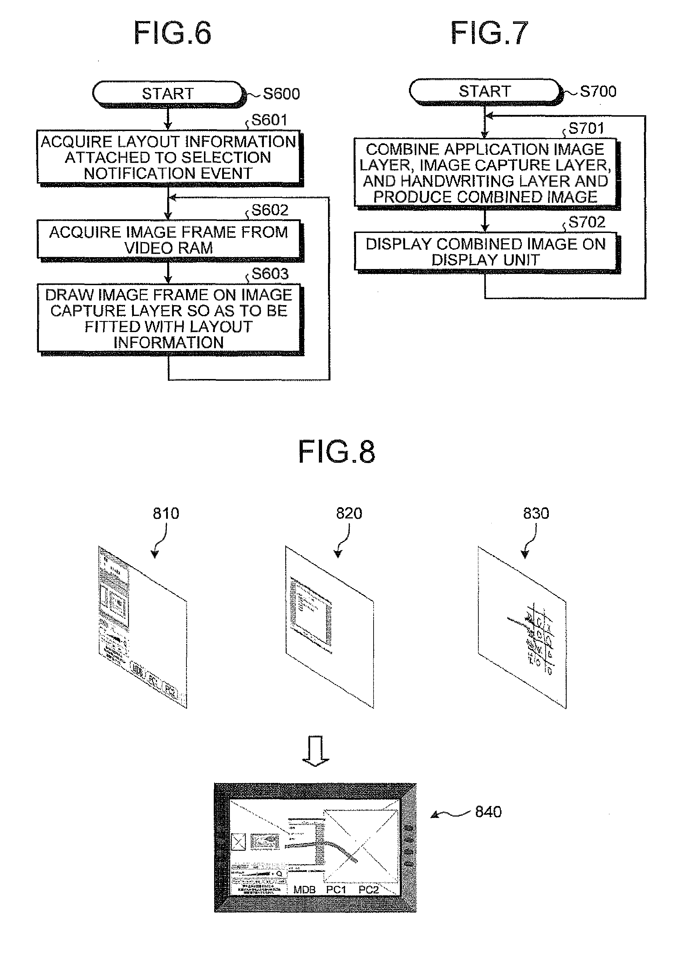

Fig. 6 is a flowchart illustrating processing executed by the layout management unit 214 of the image processing apparatus in the embodiment illustrated in Fig. 1. The processing executed by the layout management unit 214 is described below with reference to Fig. 6.

The processing illustrated in Fig. 6 starts at step S600 at which the layout management unit 214 receives a selection notification event notifying that layout of a display image of a user's PC is selected. At step S601, the layout management unit 214 acquires layout information attached to the selection notification event. At step S602, the layout management unit 214 acquires an image frame having layout thereof designated, from the video RAM 208.

In the present embodiment, an image frame corresponding to a display image of a user's PC stored in the video RAM 208 is provided with identification information of the user's PC as meta-data. Layout information attached to a selection notification event includes identification information of a display image of a user's PC having layout of the display image designated and information indicating a display position and size of the display image. The layout management unit 214 can acquire an image frame having layout thereof designated, from the video RAM 208 using identification information of a display image of a user's PC included in layout information and identification information of the image frame corresponding to the display image of the user's PC stored in the video RAM 208.

At step S603, the layout management unit 214 draws an image frame on the image capture layer so as to fit the image frame to a display position and size designated by the layout information, and thereafter the processing returns to step S602. As a result, a latest updated image frame stored in the video RAM 208 can be drawn on the image capture layer, thereby allowing a display image of the user's PCs 130a and 130b to be displayed on the display unit 112 in real time.

In another embodiment, upon receiving a selection notification event notifying that layout of a display image of a user's PC is selected, the layout management unit 214 may transmit an instruction to prohibit overwrite save of an image frame in the video RAM 208, to the image acquisition unit 206 and cause the image acquisition unit 206 to prohibit overwrite save of an image frame in the video RAM 208. As a result, a stand-by process caused by the image acquisition unit 206 performing overwrite save of an image frame in the video RAM 208 can be avoided, thereby allowing the image frame to be drawn on the image capture layer at a higher speed.

Fig. 7 is a flowchart illustrating processing executed by the combining unit and the display controlling unit of the image processing apparatus of the invention. The processing executed by the combining unit 218 and the display controlling unit 220 is described below with reference to Fig. 7.

The processing illustrated in Fig. 7 starts at step S700. At step S701, the combining unit 218 combines the application image layer, the image capture layer, and the handwriting layer to produce a combined image. At step S702, the display controlling unit 220 displays the combined image on the display unit 112, and thereafter the processing returns to step S701.

Fig. 8 is a conceptual view of combining processing of the application image layer, the image capture layer, and the handwriting layer executed by the image processing apparatus of the present invention. Fig. 8 illustrates an application image layer 810, an image capture layer 820, and a handwriting layer 830 processed by the image processing apparatus 110. The image processing apparatus 110 produces a combined image 840 by combining these layers and displays the combined image 840 on the display unit 112.

Fig. 9 is a schematic diagram illustrating an embodiment of an initial menu screen 910, a display selection menu screen 920, and a layout selection menu screen 930 that are displayed on the display unit 112 by the image processing apparatus of the present invention.

The initial menu screen 910 is displayed on the display unit 112 when the image processing apparatus 110 is booted. The initial menu screen 910 includes a display area 912 in which a display image of the user's PCs 130a and 130b is displayed. When the user's PCs 130a and 130b are not connected to the image processing apparatus 110, no display image of the user's PCs 130a and 130b is displayed in the display area 912 as illustrated in Fig. 9.

The display selection menu screen 920 is displayed on the display unit 112 when the user's PCs 130a and 130b each are connected to the image processing apparatus 110. The display selection menu screen 920 includes the display area 912 in which a display image of the user's PCs 130a and 130b is displayed as in the initial menu screen 910. In the display area 912, a display image 922 of a user's PC connected to the image processing apparatus 110 is displayed.

The layout selection menu screen 930 is displayed when the display image 922 of the user's PC displayed in the display area 912 on the display selection menu screen 920 is selected. The layout selection menu screen 930 includes a layout selection menu 932 from which layout of the display image of the user's PC can be selected and designated. A user can select and designate any of layouts.

In the embodiment illustrated in Fig. 9, display images of four user's PCs are displayed. In another embodiment, display images, number of which is equal to number of user's PCs capable of being connected to the image processing apparatus 110, can be displayed. Layouts of a display image of a user's PC displayed on the layout selection menu drawn by the image processing apparatus 110 of the present invention are not limited to the layouts of the embodiment illustrated in Fig. 9. Various layouts can be adopted.

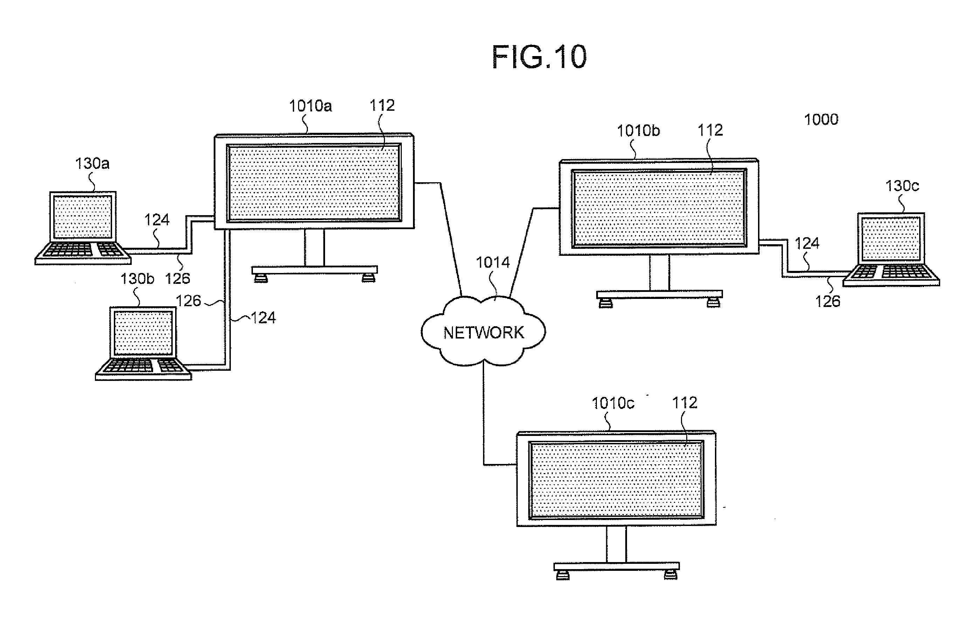

Fig. 10 is a schematic diagram illustrating another embodiment of an image processing system of the present invention. An image processing system 1000 is described below with reference to Fig. 10 primarily about difference from the image processing system 100 illustrated in Fig. 1.

In the image processing system 1000, image processing apparatuses 1010a, 1010b, and 1010c are connected through a network 1014. The network 1014 is a local area network (LAN) or the Internet, for example, through which communications of various types of data is performed among the image processing apparatuses 1010a, 1010b, and 1010c.

The image processing apparatus 1010a is connected to the user's PCs 130a and 130b with the cables 124 and 126. The image processing apparatus 1010b is connected to a user's PC 130c with the cables 124 and 126. The image processing apparatuses 1010a, 1010b, and 1010c perform communications of information such as image data and an event with each other through the network 1014.

In the embodiment illustrated in Fig. 10, the image processing apparatuses 1010a, 1010b, and 1010c are connected through the network 1014. In another embodiment, these image processing apparatuses may be directly connected in a connection manner such as a star connection without intervention of the network 1014.

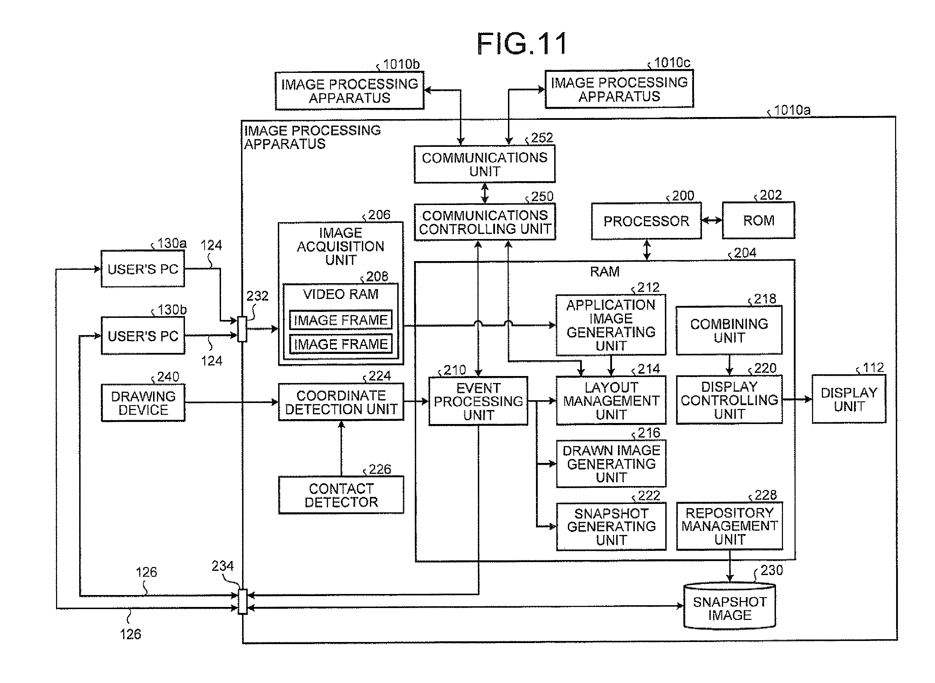

Fig. 11 is a schematic diagram illustrating a hardware configuration and a functional configuration of the image processing apparatus in the embodiment illustrated in Fig. 10. The hardware configuration and functional configuration of the image processing apparatus 1010a are described below with reference to Fig. 11 primarily about difference from the image processing apparatus 110. The image processing apparatuses 1010b and 1010c have the same hardware configuration and functional configuration as the image processing apparatus 1010a and explanation thereof is thus omitted.

The image processing apparatus 1010a includes a communications controlling unit 250 and a communications unit 252. The communications controlling unit 250 is a functional unit that controls communications among the image processing apparatuses through the network 1014. The communications unit 252 is a network interface with the network 1014. The communications controlling unit 250 performs communications of authentication information, image data such as an image frame and a snapshot image, and information on an event, for example, through the communications unit 252.

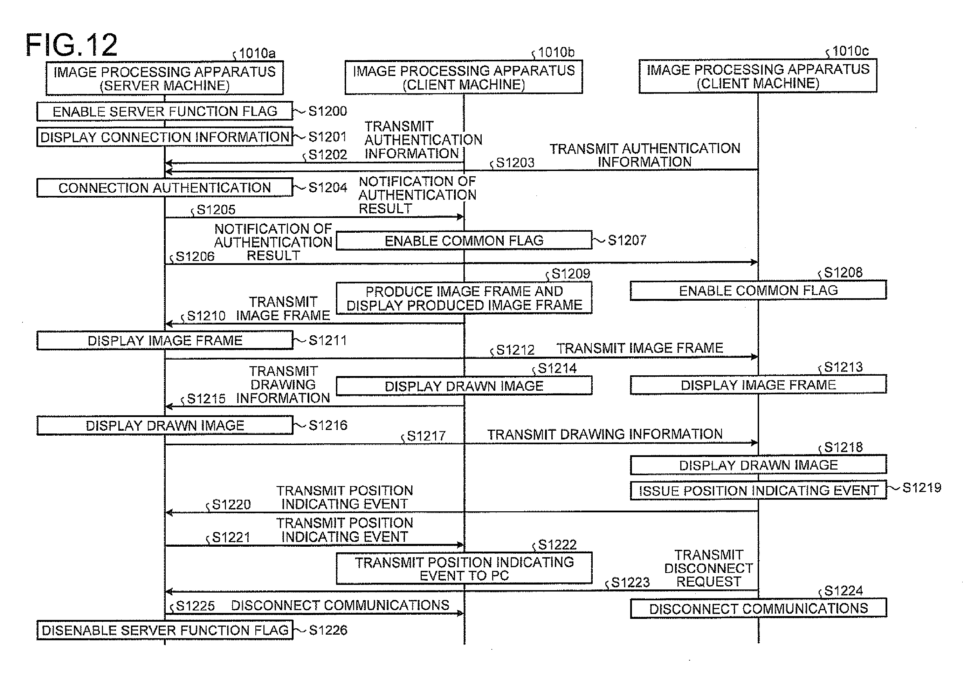

Fig. 12 is a sequence diagram illustrating processing executed by the image processing apparatuses 1010a, 1010b, and 1010c of the image processing system 1000. In the image processing system 1000, any one of the image processing apparatuses 1010a, 1010b, and 1010c functions as a server machine that performs data sharing of image data and an event, for example, and the other image processing apparatuses function as client machines. In the embodiment illustrated in Fig. 12, the image processing apparatus 1010a functions as the server machine while the image processing apparatuses 1010b and 1010c function as the client machines.

First, upon receiving a user's instruction to enable a server function, the image processing apparatus 1010a enables a server function flag (S1200). Then, the image processing apparatus 1010a displays connection information to establish connection with the image processing apparatus 1010a on the display unit 112 (S1201). The connection information includes identification information of the image processing apparatus 1010a and authentication information to establish connection with the image processing apparatus 1010a. Examples of the identification information of the image processing apparatus 1010a include an Internet protocol (IP) address and a telephone number of the image processing apparatus 1010a. The authentication information is a pass code composed of any number, symbol, and character, for example.

Then, the image processing apparatuses 1010b and 1010c serving as the client machines transmit authentication information to the image processing apparatus 1010a to request the image processing apparatus 1010a to establish a connection (S1202 and S1203). The image processing apparatus 1010a authenticates the image processing apparatuses 1010b and 1010c using the authentication information received from them (S1204) and notifies them of result thereof (S1205 and S1206). When authentication is successful, communications are established between the image processing apparatus 1010a and the image processing apparatuses 1010b and 1010c, and the image processing apparatuses 1010b and 1010c each enable a common flag that indicates whether data sharing with another image processing apparatus (S1207 and S1208).

Then, in the embodiment illustrated in Fig. 12, the image processing apparatus 1010b serving as a client machine and connected to a user's PC produces an image frame corresponding to a display image of the user's PC using an image signal provided by the user's PC, and displays the image frame on the display unit 112 of the image processing apparatus 1010b (S1209). The image processing apparatus 1010b transmits the image frame to the image processing apparatus 1010a (S1210).

Upon receiving the image frame from the client machine, the image processing apparatus 1010a displays the image frame on the display unit 112 of the image processing apparatus 1010a (S1211), and transmits the image frame to the image processing apparatus 1010c, which is a client machine other than the image processing apparatus 1010b that transmits the image frame to the image processing apparatus 1010a (S1212). Upon receiving the image frame from the server machine, the image processing apparatus 1010c displays the image frame on the display unit 112 of the image processing apparatus 1010c (S1213).

Then, in the embodiment illustrated in Fig. 12, a user causes the image processing apparatus 1010b to produce a drawn image using a drawing device. The image processing apparatus 1010b displays the drawn image on the display unit 112 of the image processing apparatus 1010b (S1214) and transmits drawing information to form the drawn image to the image processing apparatus 1010a (S1215).

Upon receiving the drawing information from the client machine, the image processing apparatus 1010a produces the drawn image using the drawing information and displays the drawn image on the display unit 112 of the image processing apparatus 1010a (S1216). The image processing apparatus 1010a transmits the drawing information to the image processing apparatus 1010c, which is a client machine other than the image processing apparatus that transmits the drawing information to the image processing apparatus 1010a (S1217). Upon receiving the drawing information from the server machine, the image processing apparatus 1010c produces the drawn image using the drawing information and displays the drawn image on the display unit 112 of the image processing apparatus 1010c (S1218).

Then, in the embodiment illustrated in Fig. 12, the image processing apparatus 1010c issues a position indicating event indicating a position designated by a user using an input device (S1219) and transmits the position indicating event to the image processing apparatus 1010a (S1220). The image processing apparatus 1010a transmits the position indicating event to the image processing apparatus 1010b, which is a client machine other than the image processing apparatus that transmits the position indicating event to the image processing apparatus 1010a (S1221). Upon receiving the position indicating event from the server machine, the image processing apparatus 1010b transmits the position indicating event to a user's PC connected to the image processing apparatus 1010b (S1222).

Then, in the embodiment illustrated in Fig. 12, the image processing apparatus 1010c transmits a disconnect request to the image processing apparatus 1010a (S1223) and disconnects communications (S1224). Upon receiving the disconnect request from the client machine, the image processing apparatus 1010a disconnects communications with the image processing apparatus 1010b, which is a client machine other than the image processing apparatus that transmits the disconnect request to the image processing apparatus 1010a (S1225) and disables a server function flag (S1226).

While the client machine provides the image frame in the embodiment illustrated in Fig. 12, the server machine can also transmit an image frame. In the embodiment, the client machine providing the image frame transmits the drawing information. However, another client machine and the server machine can transmit a drawing information. In the embodiment, the client machine that does not provide the image frame transmits the position indicating event. However, the server machine that does not provide the image frame can transmit the position indicating event.

In the embodiment, the server machine provides the image frame produced by any of the image processing apparatuses to a client machine, thereby allowing the image processing apparatuses to share an image frame and a drawn image. In addition, the server machine provides a position indicating event produced by any of the image processing apparatuses to another image processing apparatus, thereby making it possible to remotely control a user's PC connected to a separate image processing apparatus.

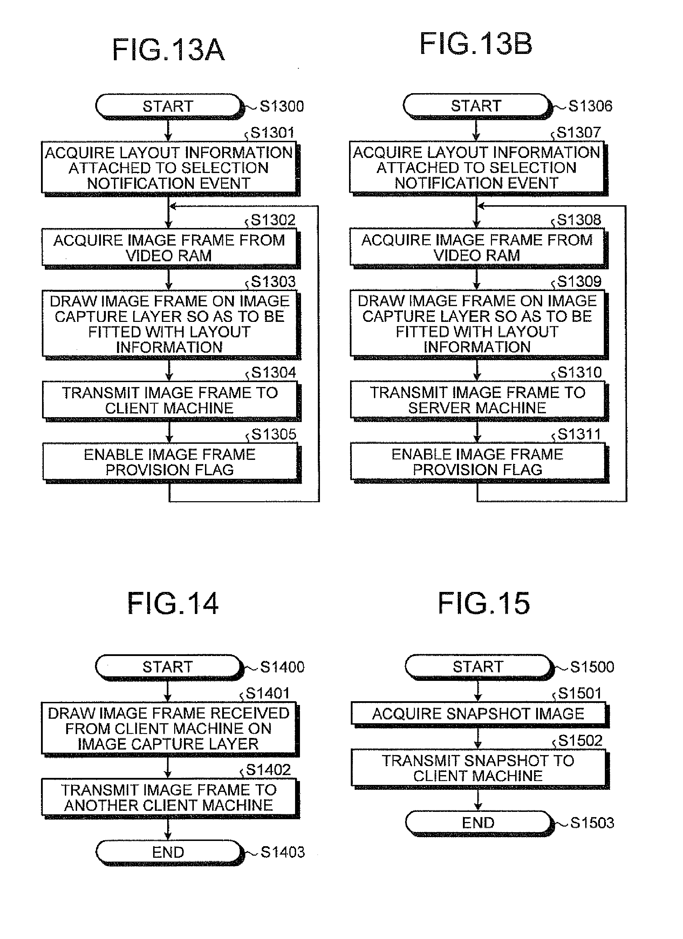

Figs. 13A and 13B are flowcharts illustrating processing executed by the image processing apparatus providing an image frame in the embodiment illustrated in Fig. 10. The processing executed by the server machine and a client machine to provide an image frame is described below with reference to Figs. 13A and 13B.

The processing illustrated in Fig. 13A is executed by the server machine and starts at step S1300, at which the layout management unit 214 of the server machine receives a selection notification event notifying that layout of a display image of a user's PC is selected. At step S1301, the layout management unit 214 acquires layout information attached to the selection notification event. At step S1302, the layout management unit 214 acquires the image frame having layout thereof designated, from the video RAM 208.

At step S1303, the layout management unit 214 draws the image frame acquired at step S1302 on the image capture layer so as to fit the image frame to a display position and size designated by the layout information. At step S1304, the communications controlling unit 250 acquires the image frame from the video RAM 208 and transmits the image frame to an image processing apparatus serving as a server machine. At step S1305, the communications controlling unit 250 enables an image frame provision flag indicating that an image frame is provided to another image processing apparatus, and thereafter the processing returns to step S1302.

The processing illustrated in Fig. 13B is processing executed by a client machine and starts at step S1306, at which the layout management unit 214 of the client machine receives a selection notification event notifying that layout of a display image of a user's PC is selected. At step S1307, the layout management unit 214 acquires layout information attached to the selection notification event. At step S1308, the layout management unit 214 acquires the image frame having layout thereof designated, from the video RAM 208.

At step S1309, the layout management unit 214 fits the image frame acquired at step S1308 to a display position and size designated by the layout information and draws the fitted image frame on the image capture layer. At step S1310, the communications controlling unit 250 acquires the image frame from the video RAM 208 and transmits the image frame to an image processing apparatus serving as the server machine. At step S1311, the communications controlling unit 250 enables an image frame provision flag, and the processing returns to step S1308.

Fig. 14 is a flowchart illustrating processing executed by the image processing apparatus serving as the server machine in the embodiment illustrated in Fig. 10. The processing executed by the server machine when the server machine receives an image frame from a client machine is described below with reference to Fig. 14.

The processing illustrated in Fig. 14 starts at step S1400, at which the communications controlling unit 250 of the server machine receives the image frame from the client machine. At step S1401, the layout management unit 214 draws the image frame on the image capture layer. At step S1402, the communications controlling unit 250 transmits the image frame to another client machine from which the image frame is not provided. Thereafter, the processing ends at step S1403.

In the present embodiment, the server machine acquires identification information of the client machine when connecting to the client machine. An image frame transmitted by an image processing apparatus is provided with identification information of the image processing apparatus. Accordingly, the server machine can determine a client machine that does not provide the image frame using the identification information of the image processing apparatus attached to the image frame and the identification information of the client machine acquired when connecting to the client machine.

Fig. 15 is a flowchart illustrating processing executed by the image processing apparatus serving as the server machine in the embodiment illustrated in Fig. 10. The processing executed by the server machine when the server machine provides a snapshot image to a client machine is described below with reference to Fig. 15.

The processing illustrated in Fig. 15 starts at step S1500, at which a user issues an instruction to cause the client machine to provide the snapshot image. At step S1501, the communications controlling unit 250 of the server machine acquires the snapshot image stored in the storage 230. At step S1502, the communications controlling unit 250 determines a client machine with which the server has established communications connection, using identification information of the client machine acquired when connecting to the client machine, and transmits the snapshot image to the client machine. Thereafter the processing ends at step S1503.

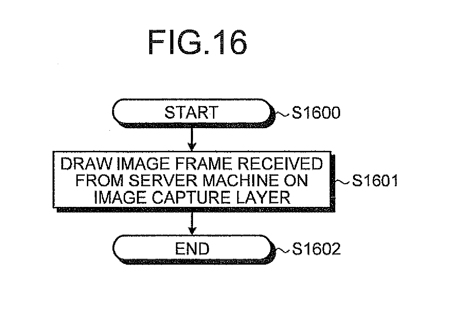

Fig. 16 is a flowchart illustrating processing executed by the image processing apparatus serving as a client machine in the embodiment illustrated in Fig. 10. The processing executed by the client machine when the client machine receives image data corresponding to an image frame or a snapshot image from the server machine is described below with reference to Fig. 16.

The processing illustrated in Fig. 16 starts at step S1600, at which the communications controlling unit 250 of the client machine receives the image data from the server machine. At step S1601, the layout management unit 214 draws the image frame or the snapshot image corresponding to the image data, on the image capture layer. Thereafter the processing ends at step S1602.

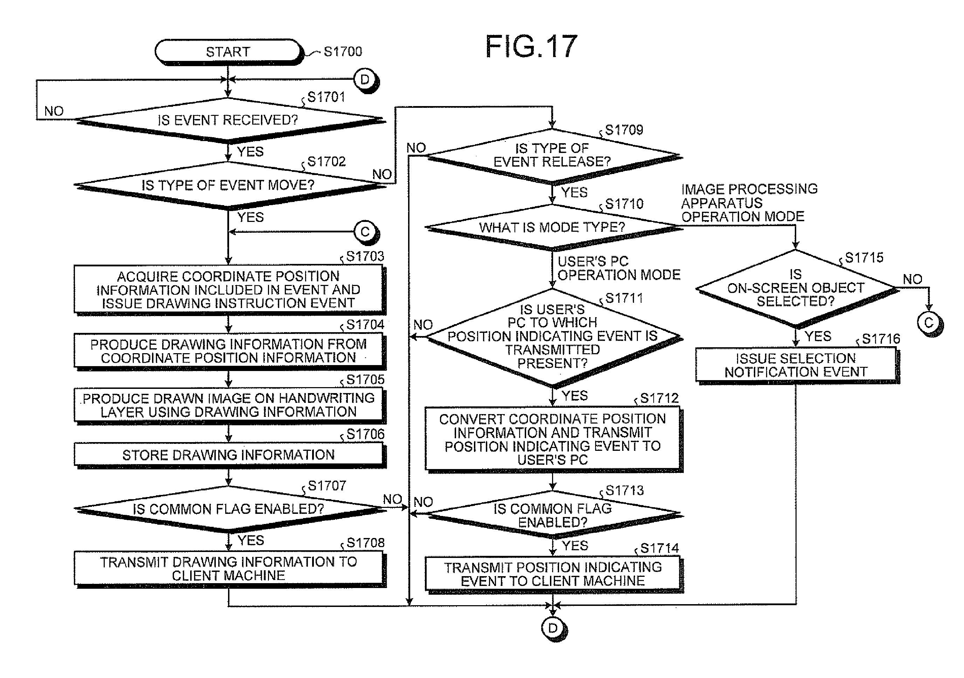

Fig. 17 is a flowchart illustrating processing executed by the image processing apparatus serving as the server machine in the embodiment illustrated in Fig. 10. The processing executed by the server machine when a user gives various instructions using the drawing device 240 is described below with reference to Fig. 17.

The processing illustrated in Fig. 17 starts at step S1700. At step S1701, the event processing unit 210 determines whether an event is received from the coordinate detection unit 224 or the communications controlling unit 250. If no event is received (No), the processing at step S1701 is repeated. On the other hand, if an event is received (Yes), the processing branches to step S1702. At step S1702, the event processing unit 210 determines whether a type of the event is "MOVE". If the type of the event is "MOVE" (Yes), the processing branches to step S1703.

At step S1703, the event processing unit 210 acquires coordinate position information included in the event received from the coordinate detection unit 224 and issues a drawing instruction event to the drawn image generating unit 216. At step S1704, the drawn image generating unit 216 produces drawing information from the coordinate position information. At step S1705, the drawn image generating unit 216 produces a drawn image on the handwriting layer using the drawing information. At step S1706, the drawn image generating unit 216 stores the drawing information in a store region for drawing information in the RAM 204.

At step S1707, the communications controlling unit 250 determines whether the common flag is enabled. If the common flag is disabled (No), the processing returns to step S1701. On the other hand, if the common flag is enabled (Yes), the processing branches to step S1708. At step S1708, the communications controlling unit 250 transmits the drawing information produced at step S1704 to all the client machines, and thereafter the processing returns to step S1701.

On the other hand, if it is determined that the type of the event is not "MOVE", i.e., the type of the event is "TOUCH" or "RELEASE" at step S1702 (No), the processing branches to step S1709.

At step S1709, the event processing unit 210 determines whether the type of the event is "RELEASE". If the type of the event is not "RELEASE", i.e., the type of the event is "TOUCH" (No), the processing branches to step S1701. On the other hand, if the type of the event is "RELEASE" (Yes), the processing branches to step S1710.

At step S1710, the event processing unit 210 determines a type of mode using mode type information attached to the event. If the type of the mode is the user's PC operation mode, the processing branches to step S1711. At step S1711, the event processing unit 210 determines whether a user's PC to which the server machine needs to transmit a position indicating event is present with reference to the image frame provision flag. In the present embodiment, it is determined that a user's PC to which the server machine needs to transmit a position indicating event is present when the image frame provision flag is enabled.

If no user's PC to which the server machine needs to transmit a position indicating event is present (No), the processing returns to step S1701. On the other hand, if a user's PC to which the server machine needs to transmit a position indicating event is present (Yes), the processing branches to step S1712.

At step S1712, the event processing unit 210 converts the coordinate position information attached to the event and transmits the converted coordinate position information and the position indicating event to the user's PC. At step S1713, the communications controlling unit 250 determines whether the common flag is enabled. If the common flag is disabled (No), the processing returns to step S1701. On the other hand, if the common flag is enabled (Yes), the processing branches to step S1714.

At step S1714, the communications controlling unit 250 transmits the position indicating event including the coordinate position information before being converted to all the client machines, and thereafter the processing returns to step S1701.

On the other hand, if it is determined that the type of the mode is the image processing apparatus operation mode at step S1710, the processing branches to step S1715. At step S1715, the event processing unit 210 determines whether an on-screen object displayed on the display unit 112 is selected. If an on-screen object is selected (Yes), the processing branches to step S1716, at which the event processing unit 210 performs notification of a selection notification event together with identification information of the on-screen object, and thereafter the processing returns to step S1701. On the other hand, if no on-screen object is selected (No), the processing returns to step S1703.

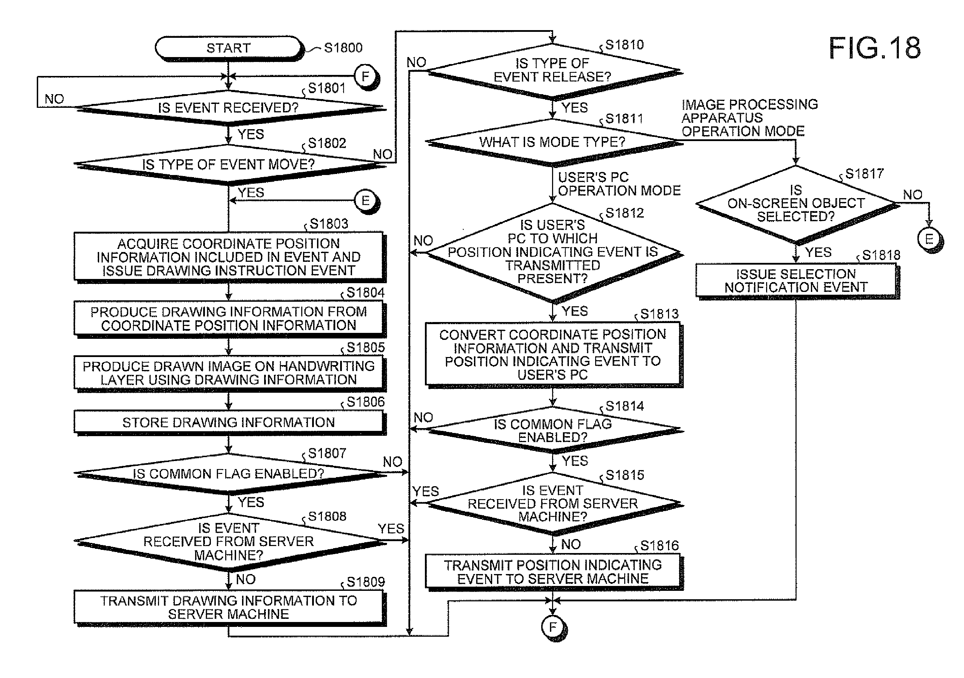

Fig. 18 is a diagram illustrating processing executed by an image processing apparatus serving as a client machine in the embodiment illustrated in Fig. 10. The processing executed by the client machine depending on a type of event is described below with reference to Fig. 18.

The processing illustrated in Fig. 18 starts at step S1800. At step S1801, the event processing unit 210 determines whether an event is received from the coordinate detection unit 224 or the communications controlling unit 250. If no event is received (No), the processing at step S1801 is repeated. On the other hand, if an event is received (Yes), the processing branches to step S1802. At step S1802, the event processing unit 210 determines whether a type of the event is "MOVE". If the type of the event is "MOVE" (Yes), the processing branches to step S1803.

At step S1803, the event processing unit 210 acquires coordinate position information included in the event received from the coordinate detection unit 224 and issues a drawing instruction event to the drawn image generating unit 216. At step S1804, the drawn image generating unit 216 produces drawing information from the coordinate position information. At step S1805, the drawn image generating unit 216 produces a drawn image on the handwriting layer using the drawing information. At step S1806, the drawn image generating unit 216 stores the drawing information in a store region for drawing information in the RAM 204.

At step S1807, the communications controlling unit 250 determines whether the common flag is enabled. If the common flag is disabled (No), the processing returns to step S1801. On the other hand, if the common flag is enabled (Yes), the processing branches to step S1808. At step S1808, the communications controlling unit 250 determines whether the event is received from the server machine. If the event is received from the server machine (Yes), the processing returns to step S1801. On the other hand, if the event is not received from the server machine (No), the processing branches to step S1809. At step S1809, the communications controlling unit 250 transmits the drawing information produced at step S1804 to the server machine, and thereafter the processing returns to step S1801.

On the other hand, if it is determined that the type of the event is not "MOVE", i.e., the type of the event is "TOUCH" or "RELEASE" at step S1802 (No), the processing branches to step S1810.

At step S1810, the event processing unit 210 determines whether the type of the event is "RELEASE". If the type of the event is not "RELEASE", i.e., the type of the event is "TOUCH" (No), the processing branches to step S1801. On the other hand, if the type of the event is "RELEASE" (Yes), the processing branches to step S1811.

At step S1811, the event processing unit 210 determines the type of the mode using mode type information attached to the event. If the type of the mode is the user's PC operation mode, the processing branches to step S1812. At step S1812, the event processing unit 210 determines whether a user's PC to which the client machine needs to transmit the position indicating event is present with reference to the image frame provision flag.

If no user's PC to which the client machine needs to transmit the position indicating event is present (No), the processing returns to step S1801. On the other hand, if a user's PC to which the client machine needs to transmit the position indicating event is present (Yes), the processing branches to step S1813.

At step S1813, the event processing unit 210 converts coordinate position information attached to the event and transmits the converted coordinate position information and the position indicating event to the user's PC. At step S1814, the communications controlling unit 250 determines whether the common flag is enabled. If the common flag is disabled (No), the processing returns to step S1801. On the other hand, if the common flag is enabled (Yes), the processing branches to step S1815.

At step S1815, the communications controlling unit 250 determines whether the event is received from the server machine. If the event is received from the server machine (Yes), the processing returns to step S1801. On the other hand, if the event is not received from the server machine (No), the processing branches to step S1816. At step S1816, the communications controlling unit 250 transmits the position indicating event including the coordinate position information before being converted, to the server machine, and thereafter the processing returns to step S1801.

On the other hand, if it is determined that the type of the mode is the image processing apparatus operation mode at step S1811, the processing branches to step S1817. At step S1817, the event processing unit 210 determines whether an on-screen object on the display unit 112 is selected. If an on-screen object is selected (Yes), the processing branches to step S1818, at which the event processing unit 210 issues a selection notification event together with identification information of the on-screen object, and thereafter the processing returns to step S1801. On the other hand, if no on-screen object is selected (No), the processing returns to step S1803.

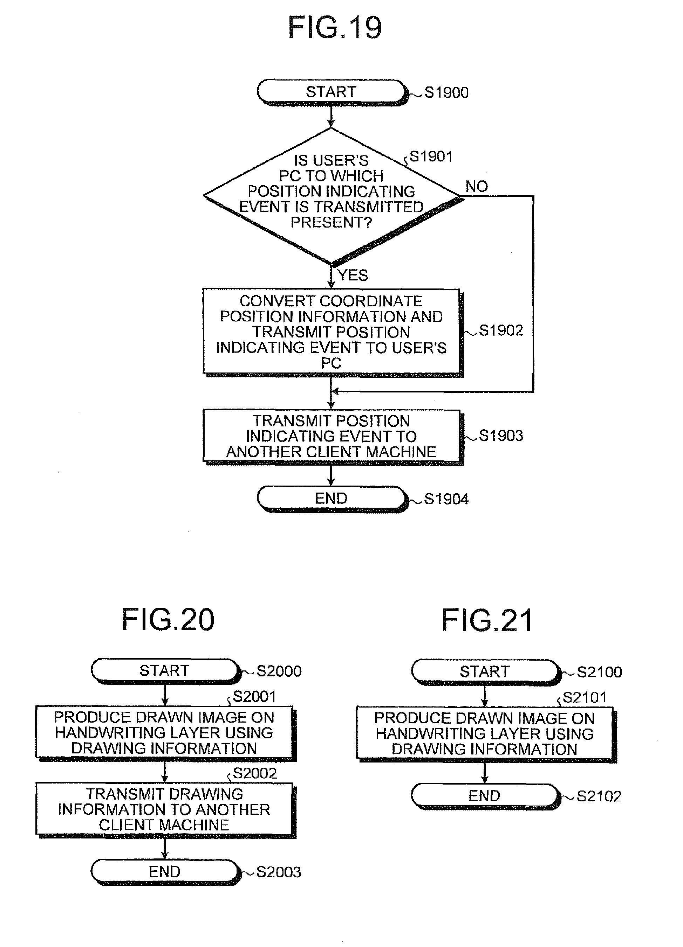

Fig. 19 is a diagram illustrating processing executed by the image processing apparatus serving as the server machine in the embodiment illustrated in Fig. 10. The processing executed by the server machine when the server machine receives a position indicating event from a client machine is described below with reference to Fig. 19.

The processing illustrated in Fig. 19 starts at step S1900, at which the communications controlling unit 250 of the server machine receives the position indicating event from the client machine. At step S1901, the event processing unit 210 determines whether a user's PC that is connected to the server machine and to which the server machine needs to transmit the position indicating event is present with reference to the image frame provision flag. If no user's PC to which the server machine needs to transmit the position indicating event is present (No), the processing branches to step S1903. On the other hand, if a user's PC to which the server machine needs to transmit the position indicating event is present (Yes), the processing branches to step S1902.

At step S1902, the event processing unit 210 converts coordinate position information attached to the event and transmits the converted coordinate position information and the position indicating event to the user's PC connected to the server machine. At step S1903, the communications controlling unit 250 transmits the position indicating event to the client machine that does not provide the position indicating event. Thereafter, the processing ends at step S1904.

The position indicating event transmitted by an image processing apparatus is provided with identification information of the image processing apparatus. Accordingly, the server machine can determine a client machine that does not provide a position indicating event using identification information of an image processing apparatus attached to the position indicating event and identification information of a client machine acquired when connecting to the client machine.

Fig. 20 is a diagram illustrating processing executed by the image processing apparatus serving as the server machine in the embodiment illustrated in Fig. 10. The processing executed by the server machine when the server machine receives drawing information from the client machine is described below with reference to Fig. 20.

The processing illustrated in Fig. 20 starts at step S2000, at which the communications controlling unit 250 of the server machine receives drawing information through the network 1014. At step S2001, the layout management unit 214 produces a drawn image on the handwriting layer using the drawing information. At step S2002, the communications controlling unit 250 transmits the drawing information to a client machine that does not provide the drawing information. Thereafter, the processing ends at step S2003.

Drawing information transmitted by an image processing apparatus is provided with identification information of the image processing apparatus. Accordingly, the server machine can determine a client machine that does not provide drawing information using identification information of an image processing apparatus attached to the drawing information and identification information of a client machine acquired when connecting to the client machine.

Fig. 21 is a flowchart illustrating processing executed by an image processing apparatus serving as a client machine in the embodiment illustrated in Fig. 10. The processing executed by the client machine when the client machine receives drawing information from the server machine is described below with reference to Fig. 21.

The processing illustrated in Fig. 21 starts at step S2100, at which the communications controlling unit 250 of the client machine receives the drawing information from the server machine. At step S2101, the layout management unit 214 produces a drawn image on the handwriting layer using the drawing information. Thereafter, the processing ends at step S2102.

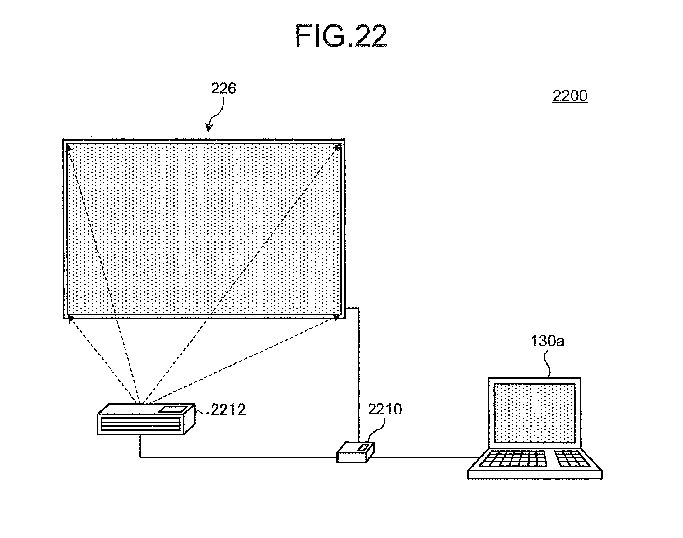

Fig. 22 is a schematic diagram illustrating still another embodiment of the image processing system of the invention. An image processing system 2200 is described below with reference to Fig. 22 primarily about difference from the image processing system 100.

The image processing system 2200 includes an image processing apparatus 2210, a projector 2212, the contact detector 226, and the user's PC 130a. The image processing apparatus 2210 is connected to the projector 2212, the contact detector 226, and the user's PC 130a with a cable. The display controlling unit 220 of the image processing apparatus 2210 controls the projector 2212 such that the projector 2212 projects various types of image data on the contact detector 226.

In the embodiment, misalignment may occur between an image projected by the projector 2212 and the contact detector 226. The misalignment may be compensated using coordinate position information relating to a position indicating event.

The image processing apparatus of the embodiments thus structured combines a drawn image with a display image of an information processing apparatus connected to the image processing apparatus and displays the combined image, thereby making it possible to display respective images displayed on screens of a plurality of information processing apparatuses in real time, and to operate the information processing apparatuses from the image processing apparatus, without installing specific software on the information processing apparatuses.

The invention is not limited to the above-described embodiments. The embodiments can be changed by deleting a component or adding another component within a range that can be conceived by a person skilled in the art. Any aspects are included in a range of the present invention as long as the aspects exhibit an effect of the present invention.

The present invention can be implemented in any convenient form, for example using dedicated hardware, or a mixture of dedicated hardware and software. The present invention may be implemented as computer software implemented by one or more network processing apparatus. The network can comprise any conventional terrestrial or wireless communications network, such as the Internet. The processing apparatus can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implemental on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image processing apparatus (110; 1010a, 1010b, 1010c; 2210), the image processing apparatus (110; 1010a, 1010b, 1010c; 2210) comprising:
an acquisition unit (206) that acquires a display image from an information processing apparatus (130a, 130b, 130c);
a position information acquisition unit (224) that acquires position information regarding a position of a substance (240) relative to a display unit (112, 226);
a drawn image generating unit (216) that produces a drawn image based on the position information;
an image generating unit (212) that produces a display window to cause the display image to be displayed on the display window;
a combining unit (218) that combines the display image, the display window, and the drawn image; and
a display controlling unit (220) that causes the display unit (112, 226) to display an image combined by the combining unit (218).

2. The image processing apparatus (110; 1010a, 1010b, 1010c; 2210) according to claim 1, wherein
the acquisition unit (206) periodically acquires a display image from the information processing apparatus (130a, 130b, 130c), and
the combining unit (218) periodically combines the display image, the display window, and the drawn image.

3. The image processing apparatus (110; 1010a, 1010b, 1010c; 2210) according to claim 1 or 2, further comprising an event processing unit (210) that produces an event of an input device of the information processing apparatus (130a, 130b, 130c) using the position information and provides the event to the information processing apparatus (130a, 130b, 130c).

4. The image processing apparatus (110; 1010a, 1010b, 1010c; 2210) according to any one of claims 1 to 3, further comprising a storage unit (208) that stores therein a display image acquired from a plurality of information processing apparatuses (130a, 130b, 130c), wherein
the acquisition unit (206) prohibits storing the display image in the storage unit (208) when receiving an instruction to prohibit storing the display image, and
the combining unit (218) combines a display image having been already stored in the storage unit (208), the display window, and the drawn image.

5. The image processing apparatus (1010a, 1010b, 1010c; 2210) according to any one of claims 1 to 4, further comprising:
a transmission unit (252) that transmits an image which the display unit (112. 226) is caused to display, to another image processing apparatus (1010a, 1010b, 1010c; 2210), wherein
the display controlling unit (220) causes the display unit (112. 226) to display an image received from another image processing apparatus (1010a, 1010b, 1010c; 2210).

6. The image processing apparatus (1010a, 1010b, 1010c; 2210) according to any one of claims 3 to 5, further comprising:
a transmission unit (252)that transmits an event for an information processing apparatus (130a, 130b, 130c) connected to another image processing apparatus (1010a, 1010b, 1010c; 2210) to the another image processing apparatus (1010a, 1010b, 1010c; 2210), wherein
the event processing unit (210) provides an event received from another image processing apparatus (1010a, 1010b, 1010c; 2210) to the information processing apparatus (130a, 130b, 130c).

7. A method that is executed by an image processing apparatus (110; 1010a, 1010b, 1010c; 2210), the method comprising:
acquiring a display image from an information processing apparatus (130a, 130b, 130c);
acquiring position information regarding a position of a substance (240) relative to a display unit (112, 226);
producing a drawn image based on the position information;
producing a display window to cause the display image to be displayed on the window;
combining the display image, the display window, and the drawn image; and
causing the display unit (112, 226) to display an image combined at the combining.

8. The method according to claim 7, wherein
the acquiring includes periodically acquiring a display image from the information processing apparatus (130a, 130b, 130c), and
the combining includes periodically combining the display image, the display window, and the drawn image.

9. The method according to claim 7 or 8, further comprising producing an event of an input device of the information processing apparatus (130a, 130b, 130c) using the position information and providing the event to the information processing apparatus.

10. The method according to any one of claims 7 to 9, wherein the image processing apparatus (110; 1010a, 1010b, 1010c; 2210) includes a storage unit (208) that stores therein a display image acquired from a plurality of information processing apparatuses (130a, 130b, 130c),
the acquiring includes prohibiting storing the display image in the storage unit (208) when an instruction to prohibit storing the display image is received, and
the combining includes combining a display image having been already stored in the storage unit, the display window, and the drawn image.

11. A computer-executable program that causes an image processing apparatus to implement the method according to any one of claims 7 to 10.

12. A computer-readable carrier medium comprising the computer-executable program according to claim 11.

13. An image processing system (1000) comprising:
an acquisition unit (206) that acquires a display image from an information processing apparatus (1010a, 1010b, 1010c);
a display unit (112) that displays an image;
a position information detector (226) that detects a position of a substance (240) relative to the display unit (112) and produces position information;
an drawn image generating unit (216) that produces a drawn image based on the position information;
an image generating unit (212) that produces a display window to cause the display image to be displayed on the display window;
a combining unit (218) that combines the display image, the display window, and the drawn image; and
a display controlling unit (220) that causes the display unit (112) to display an image combined by the combining unit (218).
